# EUROPÄISCHE PATENTANMELDUNG

(11) **EP 2 031 324 A2**
(43) Veröffentlichungstag der Anmeldung: **04.03.2009**
(21) Anmeldenummer: 08014945.3
(22) Anmeldetag: 23.08.2008
(51) Int. Cl.: F24J 2/52, H01L 31/042

(54) **Solareinrichtung**

(30) Priorität: 31.08.2007 DE 102007041199
(71) Anmelder: Wischemann, Heinrich, 48607 Ochtrup (DE)
(72) Erfinder: Wischemann, Heinrich, 48607 Ochtrup (DE)
(74) Vertreter: Habbel, Ludwig

(57) **Zusammenfassung**

Bei einer die Einstrahlung von Sonnenlicht nutzende Solareinrichtung (1), mit einem Solarmodul (2), welches als Photovoltaik-Modul zur Erzeugung elektrischer Energie oder als Solarkollektor zur Erwärmung eines durch den Kollektor geleiteten Wärmeträgerfluids ausgestaltet ist, und mit einer das Solarmodul gegenüber einem Untergrund abstützenden Stütze, welche eine einen Boden, eine Rückwand und eine Vorderwand ausbildende so genannte Solarwanne (3) umfasst, schlägt die Erfindung vor, dass nahe der Vorderwand (6) der Solarwanne (3) eine vordere Kante des Solarmoduls (2) festgelegt ist, und dass Zwischenstücke (4) vorgesehen sind, die jeweils eine Basis (10) aufweisen, mit welcher sie sich nahe der Rückwand (7) auf der Solarwanne (3) abstützen, sich von der Basis (10) aufwärts erstrecken, und die eine Halterung (11) oberhalb der Basis (10) aufweisen, an welcher Halterung das Solarmodul (2) im Abstand von seiner vorderen Kante festgelegt ist.

## Beschreibung

Die Erfindung betrifft eine Solareinrichtung nach dem Oberbegriff des Anspruchs 1.

Aus der DE 10 2006 026 297 B3 ist eine derartige Solareinrichtung bekannt. Bei der dabei verwendeten Solarwanne ist die Vorderwand niedriger ausgestaltet als die Rückwand, so dass eine fest vorgegebene Schrägstellung des Solarmoduls bewirkt wird.

Aus der DE 200 08 509 U1 ist eine Solareinrichtung bekannt, bei der eine liegende Grundplatte den Boden und eine stehende Wandplatte die Rückwand einer Traganordnung für Solarmodule bilden. Eine Solarwanne mit Vorderwand ist nicht vorgesehen. Durch die liegende Anordnung der Grundplatte und die stehende Anordnung der Wandplatte wird eine fest vorgegebene Schrägstellung des Solarmoduls bewirkt.

Aus der DE 298 15 134 U1 ist eine Solareinrichtung bekannt, bei der als Kantprofile ausgestaltete Trägerelemente die Solarmodule halten. Die vorderen Trägerelemente sind dabei niedriger ausgestaltet als die rückwärtigen Trägerelemente. Eine Solarwanne mit Vorder-, Rück- und Seitenwänden ist nicht vorgesehen. Durch die unterschiedlich hohe Ausgestaltung der Trägerelemente wird eine fest vorgegebene Schrägstellung des Solarmoduls bewirkt.

Aus der DE 79 13 751 U1 ist eine Solareinrichtung bekannt, bei der sockelartige Blöcke in regelmäßigen Abständen angeordnet und miteinander durch Zugbänder verbunden sind. An jedem Block ist ein Tragwinkel vorgesehen, der die untere bzw. vordere Kante eines Solarmoduls hält. Von der oberen bzw. hinteren Kante des Solarmoduls verläuft eine Stütze schräg abwärts nach hinten zu einem weiter hinten angeordneten Block. Da die Stützen teleskopierbar sind, können die Solarmodule in unterschiedlichen Schrägstellungen angeordnet werden. Eine Solarwanne mit Boden, sowie mit Vorder-, Rück- und Seitenwänden ist nicht vorgesehen.

Aus der DE 10 2005 033 545 A1 ist eine Solarwanne bekannt. Zur Anordnung der Solarmodule sind nicht näher erläuterte Montagegestelle vorgesehen.

Aus der US 43 78 006 ist eine Solareinrichtung bekannt, bei der eine Solarwanne vorgesehen ist, in welche ein Montagegestell gestellt wird, welches seinerseits ein Solarmodul trägt. Das Montagegestell kann Beine aufweisen, wobei die vorderen Beine niedriger ausgestaltet sind als die rückwärtigen Beine, so dass eine fest vorgegebene Schrägstellung des Solarmoduls bewirkt wird.

Aus der US 46 49 899 ist eine technisch und wirtschaftlich aufwendige Solareinrichtung bekannt, bei der das Solarmodul beweglich gehalten ist, so dass es kontinuierlich veränderlich ausgerichtet werden kann und dem Sonnenlauf entsprechend nachgeführt werden kann. Hierzu ist ein Montagegestell vorgesehen um eine aufrechte Achse drehbar ist und ein Schwenklager mit horizontaler Schwenkachse für das Solarmodul aufweist. Die automatische Nachführung erfolgt mittels Solarzellen-Detektoren und motorischer Antriebe.

Der Erfindung liegt die Aufgabe zugrunde, eine gattungsgemäße Solareinrichtung dahingehend zu verbessern, dass diese beim Transport möglichst platzsparend angeordnet werden kann und an unterschiedliche Aufstellorte oder Einstrahlwinkel des Sonnenlichtes angepasst werden kann.

Diese Aufgabe wird durch eine Solareinrichtung mit den Merkmalen des Anspruchs 1 gelöst.

Die Erfindung schlägt mit anderen Worten vor, den Winkel, den das Solarmodul gegenüber dem Untergrund einnimmt, nicht ausschließlich durch die Formgebung der Solarwanne zu bestimmen, sondern vielmehr Zwischenstücke an der Rückwand der Solarwanne vorzusehen. Während die Vorderkante des Solarmoduls nahe der Vorderwand der Solarwanne festgelegt wird, kann die Neigung des Solarmoduls gegenüber der Solarwanne durch Zwischenstücke der gewünschten Höhe bestimmt werden. Da die Zwischenstücke vorschlagsgemäß höhenverstellbar ausgestaltet sind, muss zur Anpassung an unterschiedliche Neigungswinkel des Solarmoduls keine Auswahl oder ein Wechsel von Zwischenstücken erfolgen, sondern es kann erheblich einfacher und zeitsparender die gewünschte Höhe eingestellt werden.

So kann beispielsweise vorgesehen sein, Vorder- und Rückwand der Solarwanne gleich hoch auszugestalten. Bei Montage auf schrägen Dächern wird so ein optimaler Einstrahlungswinkel auf das Solarmodul ermöglicht, indem dieses genauso geneigt ist wie die Dachhaut. Hierzu können beispielsweise die Zwischenstücke sehr flach eingestellt werden.

Bei Aufstellung auf einem Flachdach hingegen, oder auf anderweitig horizontalen Flächen, können die Zwischenstücke höher eingestellt werden, so dass hierdurch eine Neigung des Solarmoduls gegenüber der Dachfläche, also der Horizontalen, und somit ebenfalls ein optimaler Einstrahlungswinkel erzielt werden kann.

Zudem kann durch Verstellung der Zwischenstücke eine Anpassung der Neigung des Solarmoduls erzielt werden, beispielsweise um einen Sommerbetrieb und einen Winterbetrieb zu ermöglichen, in Anpassung an die dementsprechend unterschiedlichen, jahreszeitlich bedingten Einstrahlungswinkel des Sonnenlichtes.

Die Solarwanne kann preisgünstig als Tiefzieh-Formteil hergestellt werden. Dabei ist üblicherweise eine leicht konische Gestaltung der Umfangsflächen vorgesehen, um das Formteil leichter entformen zu können. Diese Konizität ermöglicht es, mehrere gleichartige Solarwannen ineinander zu stapeln. Bezogen auf den "umbauten Raum" weist eine Solarwanne ein geringes Gewicht auf. Die Transportkapazität eines LKWs kann daher optimal genutzt werden, indem eine Vielzahl von Solarwannen möglichst platzsparend ineinander gestapelt transportiert wird. Die Stützen können platzsparend separat in Lücken des Transportraums untergebracht werden, so dass sich insgesamt möglichst niedrige Transportkosten für die Solarwannen bzw. die gesamten Solareinrichtungen ergeben.

Wenn die Solarwanne mit einem oberen umlaufenden Rand ausgestaltet ist und geschlossene Vorder- und Seitenwände aufweist, bewirken die Zwischenstücke - selbst wenn sie vergleichsweise flach ausgebildet sind - die Ausbildung eines Spaltes zwischen der Solarwanne und dem Solarmodul und somit eine Hinterlüftung des Solarmoduls. Bei Verwendung photovoltaischer Solarmodule erhöht diese Hinterlüftung den Wirkungsgrad der Solarmodule und verbessert somit den Ertrag der Solareinrichtung, da der Wirkungsgrad der photovoltaischen Solarmodule bei steigender Modultemperatur sinkt.

Vorteilhaft weist die Solarwanne nahe ihrer Vorderwand Befestigungsstellen auf, an denen das Solarmodul mit der Solarwanne fest verbunden ist, während gegenüberliegend die Zwischenstücke Rasten ausbilden, an denen das Solarmodul an der Halterung des jeweiligen Zwischenstücks in Art einer Schnappverbindung gehalten ist. Auf diese Weise wird einerseits eine schnelle Montage des Solarmoduls an der Solarwanne ermöglicht: Eine Festlegung erfolgt lediglich an der Vorderkante des Solarmoduls, während gegenüberliegend an den Zwischenstücken eine mit einem Handgriff auszuübende Schnappverbindung zwischen dem Solarmodul und der Halterung des Zwischenstückes hergestellt werden kann.

Während die Festlegung des Solarmoduls nahe der Vorderwand der Solarwanne die zuverlässige Sicherung des Solarmoduls an der Solarwanne ermöglicht und somit auch eine Art Festlager bildet, ermöglicht die Schnappverbindung eine Relativ- bzw. Gleitbewegung zwischen dem Solarmodul und der Solarwanne und somit einen Ausgleich unterschiedlicher Ausdehnungen, die beispielsweise bei wechselnden Umgebungstemperaturen aufgrund unterschiedlicher Temperaturdehnungskoeffizienten des Solarmoduls und der Solarwanne auftreten können. Auf diese Weise ist eine spannungsfreie Befestigung des Solarmoduls und somit eine optimale Schonung des Solarmoduls sichergestellt.

Vorteilhaft kann die erwähnte feste Verbindung zwischen Solarmodul und Solarwanne durch eine Verschraubung erfolgen, also mittels einer vielfach bekannten und erprobten Befestigungstechnik, die einerseits einen zügigen Arbeitsfortschritt ermöglicht und zudem eine zuverlässige Verbindung auch unter den Witterungsverhältnissen ermöglicht, die bei den im Freien aufgestellten Solareinrichtungen auftreten.

Unterschiedlich groß bemessene Zwischenstücke können in grundsätzlicher Anpassung an den jeweiligen Aufstellungsort verwendet werden, beispielsweise in Abhängigkeit davon, ob die Solareinrichtung auf einem geneigtem Dach oder auf einem Flachdach montiert werden soll. Die Höhenverstellung kann bei den verwendeten Zwischenstücken stets dann genutzt werden, wenn eine Feineinstellung gewünscht ist, beispielsweise in Anpassung daran, wie groß der Neigungswinkel der geneigten Dachfläche ist, oder wenn ein Wechsel der Neigung in Anpassung an einen Sommer- und einen Winterbetrieb der Solareinrichtung erfolgen soll.

Wirtschaftlich vorteilhaft für den Hersteller der Solareinrichtung kann durch die Höhenverstellbarkeit der Zwischenstücke die Anzahl herzustellender unterschiedlicher Zwischenstücke reduziert werden, und vorteilhaft für den Betreiber der Solareinrichtung kann die Höhenverstellbarkeit der Zwischenstücke zugunsten eines optimalen Wirkungsgrades der Solareinrichtung dazu genutzt werden, den optimalen Winkel des Solarmoduls zur jeweiligen Sonneneinstrahlung einzustellen.

Vorteilhaft kann die Solarwanne flexibel ausgestaltet sein, insbesondere bzw. zumindest in dem Bereich, wo das Solarmodul an der Solarwanne festgelegt ist. Auf diese Weise ist es nicht erforderlich, die feste Verbindung zwischen Solarwanne und Solarmodul zu lösen, wenn im Bereich der Zwischenstücke eine Winkelverstellung des Solarmoduls erfolgt, z. B. durch Aus-Austausch oder durch Höhenverstellung der Zwischenstücke. Vielmehr gleicht die Solarwanne durch ihre Verformbarkeit diese unterschiedlichen Winkelstellungen des Solarmoduls aus, sodass keine unzulässigen Spannungen im Solarmodul auftreten.

Vorteilhaft kann das Solarmodul einen umlaufenden Rahmen aufweisen, der zur Festlegung des Solarmoduls an den Zwischenstücken bzw. an der Solarwanne dient. So kann beispielsweise ein metallischer Rahmen verwendet werden, der durch Verschraubung eine zuverlässige Festlegung des Solarmoduls an der Solarwanne sicherstellen kann. Auch an den Zwischenstücken kann ein solcher Rahmen durch seine Festigkeit die zuverlässige Beibehaltung der Schnappverbindung sicherstellen. Diese Festigkeit des Rahmens kann einerseits durch das Rahmenmaterial selbst sichergestellt sein, beispielsweise durch Verwendung eines metallischen Rahmens, und / oder sie kann durch die Geometrie bzw. Profilierung des Rahmens sichergestellt sein, so dass jedenfalls die hergestellte Schnappverbindung auch unter den im Freien herrschenden Witterungsverhältnissen, insbesondere Windeinwirkungen, nicht ungewollt lösbar ist.

Vorteilhaft weist die Solarwanne an ihrer Rückwand mehr Befestigungsstellen auf als für die Festlegung der jeweils genutzten Zwischenstücke erforderlich ist. Auf diese Weise kann entweder die Anzahl der verwendeten Zwischenstücke gewählt werden, beispielsweise in Anpassung an das jeweilige Modulgewicht, oder es können bei vorgegebener Anzahl der verwendeten Zwischenstücke die Montage-Positionen der Zwischenstücke gewählt werden, so dass beispielsweise eine optimale Anpassung an unterschiedliche Modulgrößen möglich ist, so dass in wirtschaftlich vorteilhafter Weise die gleiche Solarwanne zur Montage unterschiedlich großer Solarmodule verwendet werden kann.

Vorteilhaft kann die Solarwanne aus Kunststoff bestehen. Auf diese Weise ist eine witterungsbeständige und elastisch verformbare Ausgestaltung der Solarwanne möglich. Dabei können die Solarwannen preisgünstig und leichtgewichtig zugunsten niedriger Transportkosten ausgestaltet werden.

Vorteilhaft kann der Boden der Solarwanne gleitmindernd ausgestaltet sein, um eine möglichst hohe Reibung zwischen der Solarwanne und dem Aufstellungsort, also dem jeweiligen Untergrund, zu ermöglichen. Dabei geht der vorliegende Vorschlag von der Überlegung aus, dass die Solareinrichtung gegen Windeinflüsse geschützt werden muss und dementsprechend verschiebesicher auf dem Untergrund aufgestellt werden soll.

Grundsätzlich ist es denkbar, die Solarwannen mit dem Untergrund fest zu verankern, beispielsweise in Form einer Verschraubung, oder mit Hilfe von Bodendübeln oder dergleichen. In vielen Fällen jedoch werden die Solareinrichtungen nicht auf dem freien Feld aufgestellt, sondern auf Gebäuden, beispielsweise auf Flachdächern oder auf geneigten Dächern. Während auf den geneigten Dächern ohnehin eine Abrutschsicherung erforderlich ist, die bei geeigneter Ausgestaltung eine Sicherung der Solareinrichtung auf dem Dach auch gegen Windeinwirkungen ermöglichen kann, kann auf Flachdächern grundsätzlich auf Verankerungen verzichtet werden, so dass die Dachhaut nicht an einer Vielzahl von Stellen durchbrochen werden muss, was ja stets das Problem von möglichen Undichtigkeiten mit sich bringt.

Um auch bei nicht verankerten Solarwannen, wie z. B. auf Flachdächern, eine zuverlässige Standfestigkeit der Solareinrichtungen auch bei einwirkenden Windlasten zu ermöglichen, können die Solarwannen in an sich bekannter Weise beschwert werden, beispielsweise durch in die Solarwanne eingefüllten Ballast. Dies kann in der Praxis kostengünstig in Form von Schutt, Kies o. dgl. erfolgen. Die damit verbundene Gewichtslast belastet allerdings die Statik des Gebäudes, insbesondere des Flachdaches. Wenn die Solareinrichtungen bei bestehenden Dächern nachgerüstet werden sollen, besteht daher häufig das Problem, dass die für einen optimalen Solar-Ertrag nutzbare potenzielle Fläche von Solarmodulen, die auf der Fläche des Daches aufgestellt werden könnte, aus Gründen der Statik nicht auf dem Dach aufgestellt werden kann. Beim Neubau von Gebäuden kann die mit einer Solaranlage verbundene Belastung der Statik zwar eingerechnet werden, allerdings verursacht die dann verstärkte Statik des Flachdaches erheblich höhere Baukosten.

Vorteilhaft kann daher vorgesehen sein, dass die Unterseite des Bodens der Solarwanne gleitmindernd, also reibfreudig ausgestaltet ist. Auf diese Weise kann auch bei einem deutlich verringerten Ballast die Solarwanne zuverlässig gegen Verschiebebewegungen an ihrem Aufstellungsort gesichert werden.

So kann beispielsweise vorteilhaft vorgesehen sein, die Unterseite des Bodens mit einer gummiartigen, reibfreudigen Beschichtung zu versehen. So ist es aus der Praxis bekannt, Oberflächen z. B. mit einer TPE-O-Beschichtung zu versehen, also mit einer Beschichtung aus einem thermoplastischen Elastomer auf Olefin-Basis, wobei vergleichbare gummiartige Beschichtungen auch in Form von thermoplastischen Elastomeren auf Urethan-Basis bekannt sind, so dass jedenfalls durch den stark erhöhten Reibbeiwert die Solareinrichtung auch bei leichtgewichtiger Ausgestaltung und geringem Ballastanteil sehr gut gegen Verschiebebewegungen gesichert ist.

Alternativ kann vorgesehen sein, dass die Unterseite des Bodens mit einer Beschichtung versehen ist, die im Vergleich zu dem übrigen für die Solarwanne verwendeten Werkstoff eine erheblich bessere Verklebbarkeit der Solarwanne ermöglicht. Während der Herstellung der Solarwanne kann der dazu verwendete Werkstoff vergleichsweise problemlos mit einer entsprechenden Beschichtung aus anderem Material versehen werden, während nach Herstellung der Solarwanne diese aufgrund des verwendeten Werkstoffs ggf. nur schlecht verklebbar wäre. Eine Verklebung erleichternde bzw. verbessernde Oberflächenbeschichtung an der Unterkante des Bodens der Solarwanne kann es daher ermöglichen, die Solarwanne durch eine Verklebung zuverlässig am Untergrund zu sichern.

Alternativ kann vorgesehen sein, dass die Unterseite des Bodens mit einem oberflächenrauen Material versehen ist, beispielsweise mit einem etwa noppenartigen oder mit Grübchen versehenen Material, welches eine mechanische Verzahnung mit einem entsprechend ausgestalteten Untergrund ermöglicht. So kann beispielsweise eine Art Noppenplatte oder Noppenmatte auf dem Untergrund vorgesehen sein. Durch die Oberflächenprofilierung wird ein mechanischer Verbund mit der Solarwanne und deren oberflächenrauer Beschichtung bewirkt, so dass die Solarwanne entsprechend gut gegen Verschiebebewegungen gesichert ist. Die Noppenplatte oder Noppenmatte kann fest mit dem Untergrund verbunden sein, beispielsweise durch Verklebung. Alternativ kann sie zum Untergrund einen hohen Reibwert aufweisen, beispielsweise indem die Platte oder Matte aus einem Gummirecyclat preisgünstig hergestellt ist, wobei ein solches Material auch aufgrund seines vergleichsweise hohen spezifischen Gewichts sicherstellt, dass die Platte oder Matte ohnehin sicher auf dem Untergrund liegen bleibt.

Alternativ kann die Oberflächenrauhigkeit durch ein Material bereitgestellt werden, welches einen der beiden Teile eines Häkchenverschlusses bildet, beispielsweise den Flauschteil oder den Häkchenteil eines derartigen Häkchenverschlusses. Das dementsprechende Material kann beispielsweise in Form von einem oder mehreren schmalen Streifen bzw. in Form einer breiteren Bahn in das Werkzeug einlaufen, in welchem die Solarwanne hergestellt wird, so dass bereits nach Entnahme der fertigen Solarwanne aus dem Werkzeug diese Solarwanne mit dem entsprechenden Material des Häkchenverschlusses versehen ist. Auf den Boden, beispielsweise auf ein Flachdach, kann der korrespondierende Teil des Häkchenverschlusses aufgebracht werden, beispielsweise indem dieser zweite Teil des Häkchenverschlusses an einer Bodenmatte vorgesehen ist, die wie vorbeschrieben beispielsweise aus einem preisgünstigen Gummirecyclat besteht und somit aufgrund ihres hohen Reibbeiwertes eine hohe Verschiebesicherheit gegenüber dem Untergrund aufweist.

Bei der Höhenverstellbarkeit der Zwischenstücke kann vorteilhaft vorgesehen sein, dass diese insofern drehfrei ausgestaltet sind, als einerseits die Basis mit der Solarwanne verbunden bleiben kann und andererseits die Halterung mit dem Solarmodul verbunden bleiben kann, während das Zwischenstück in seiner Höhe verstellt wird. Wenn beispielsweise in Art einer Spindel zwei Abschnitte des Zwischenstückes höhenverstellbar sind, so sind die Basis einerseits und die Halterung andererseits drehbeweglich gegenüber dieser Spindelverstellung gelagert, so dass diese Spindelverstellung zwischen der Basis und der Halterung verstellt werden kann, ohne dass dabei die Basis oder die Halterung des Zwischenstück verdreht werden müssen. Auf diese Weise wird eine besonders schnelle Verstellbarkeit der Zwischenstücke ermöglicht, da der Handhabungsaufwand für das Lösen und ein erneutes Verbinden mit dem Solarmodul oder mit der Solarwanne entfallen kann.

Vorteilhaft können die Zwischenstücke zugunsten ihrer Höhenverstellbarkeit teleskopierbar sein. Auf diese Weise ist es möglich, eine besonders preisgünstige Ausgestaltung der Zwischenstücke zu wählen. Dabei kann das Zwischenstück lediglich drei Teile aufweisen: Ein erster Teil weist die Basis auf und ist mit der Solarwanne verbindbar, ein zweiter Teil weist die Halterung auf und ist mit dem Solarmodul verbindbar und ein dritter Teil sichert diese beiden teleskopierbaren Elemente in ihrer jeweils eingestellten Höhe, beispielsweise in Form eines preisgünstigen Sicherungsstiftes.

Beispielsweise können Querbohrungen in beiden Elementen vorgesehen sein, so dass die beiden Elemente des Zwischenstückes in bestimmten Abständen, die fest vorgegeben sind, verstellt werden können. Im Vergleich zu einer stufenlosen, beispielsweise spindelartigen Höheneinstellung der Zwischenstücke wird auf diese Weise eine problemlose und schnelle gleichartige Höheneinstellung mehrerer Zwischenstücke ermöglicht und es müssen daher keine zeitraubenden, langwierigen Anpassungsarbeiten zur exakt gleichen Höheneinstellung durchgeführt werden, wie sie bei einer stufenlosen Verstellbarkeit erforderlich sein können.

Die Ausgestaltung einer Solarwanne entsprechend den vorbeschriebenen Merkmalen, die eine Solarwanne der vorschlagsgemäßen Solareinrichtung aufweist, stellt eine besonders vorteilhafte Ausgestaltung einer Solarwanne dar.

Die Solarwanne kann als rechteckiges Element ausgestaltet sein. Sie kann ringsum verlaufende Wände aufweisen, also Vorder- und Rückwand sowie zwei Seitenwände. Abweichend von einer rechteckigen Grundform der Solarwanne kann vorgesehen sein, dass diese Wände kontinuierlich ineinander übergehen, ohne speziell ausgeprägte Eckbereiche aufzuweisen, so dass beispielsweise die Solarwanne eine ovale oder kreisrunde Grundform aufweisen kann.

Bei länglicher Ausgestaltung der Solarwanne hingegen kann vorgesehen sein, dass eine oder beide Seitenwände entfallen. So können beispielsweise die Solarwannen problemlos in beliebiger Zahl aneinander gereiht werden, wenn sie unter Verzicht auf die seitlichen Wände als offene Rinne ausgestaltet sind und die beiden Endbereiche einer Solarwanne so korrespondierend unterschiedlich ausgestaltet sind, dass eine formschlüssige Verbindung zweier benachbarter Solarwannen miteinander möglich ist. Auf diese Weise kann eine optimale Aufstellungsdichte der Solarmodule dadurch erreicht werden, dass diese möglichst nah benachbart auf einer derartig beliebig langen Rinne von Solarmodulen angeordnet werden können.

Wenn der Innenraum der Solarwanne Ballast aufnehmen soll, kann vorteilhaft vorgesehen sein, die Solarwanne seitlich abzuschließen, nämlich mithilfe von Seitenwänden, sodass dieses Beschwerungsmaterial nicht durch Witterungseinflüsse ausgetragen oder ausgeschwemmt wird. Bei einer einzeln aufgestellten Solarwanne kann dazu vorgesehen sein, diese eine Solarwanne mit zwei Seitenwänden zu versehen. Bei einer aneinander reihbaren rinnenartigen Solarwanne kann vorgesehen sein, dass die gesamte Rinne ein rechtes und ein linkes Endstück aufweist, welches jeweils lediglich eine Seitenwand aufweist, so dass die Rinne über ihre Gesamtlänge innen durchgehend frei von Seitenwänden ist und nur an den beiden äußeren Enden die Seitenwände aufweist.

Es kann vorteilhaft für die Erzielung eines möglichst hohen Wirkungsgrades des Solarmoduls sein, dieses Solarmodul dem wechselnden Sonnenstand über den Tagesverlauf nachzuführen. Hierzu kann vorteilhaft ein Drehteller vorgesehen sein, der das Solarmodul trägt und seinerseits gegenüber der Solarwanne um eine aufrechte Achse hin und her schwenkbar ist.

Um konstante Gewichtsbelastungen durch die Solareinrichtung sicherzustellen und beispielsweise eine Überlastung der Dachkonstruktion durch Regenwasser in den Solarwannen zu vermeiden, kann vorteilhaft vorgesehen sein, dass der Boden der Solarwanne Durchbrechungen aufweist, durch welche eindringende Feuchtigkeit abfließen kann. Auf diese Weise wird das Ansammeln von Flüssigkeit in der Solarwanne und die Bildung von Staunässe verhindert.

Vorteilhafte Ausgestaltungen der Solareinrichtung und der dabei verwendeten Solarwanne werden anhand der rein schematischen Darstellungen nachfolgend näher erläutert. Dabei zeigen die
- Fig. 1 - 5: ein erstes Ausführungsbeispiel einer Solareinrichtung,
- Fig. 6 u. 7: die Solarwanne des ersten Ausführungsbeispiels aus zwei unterschiedlichen Perspektiven,
- Fig. 8 - 10: ein zweites Ausführungsbeispiel einer Solareinrichtung aus unterschiedlichen Blickrichtungen,
- Fig. 11 u. 12: ein drittes Ausführungsbeispiel einer Solareinrichtung, die
- Fig. 13 - 17: einzelne Teile bzw. Baugruppen des dritten Ausführungsbeispiels aus unterschiedlichen Blickrichtungen, und die
- Fig. 18 u. 19: ein höhenverstellbares Zwischenstück aus unterschiedlichen Blickrichtungen.

In den Zeichnungen ist jeweils mit 1 eine Solareinrichtung bezeichnet, die jeweils ein Solarmodul 2, eine Solarwanne 3 und Zwischenstücke 4 aufweist.

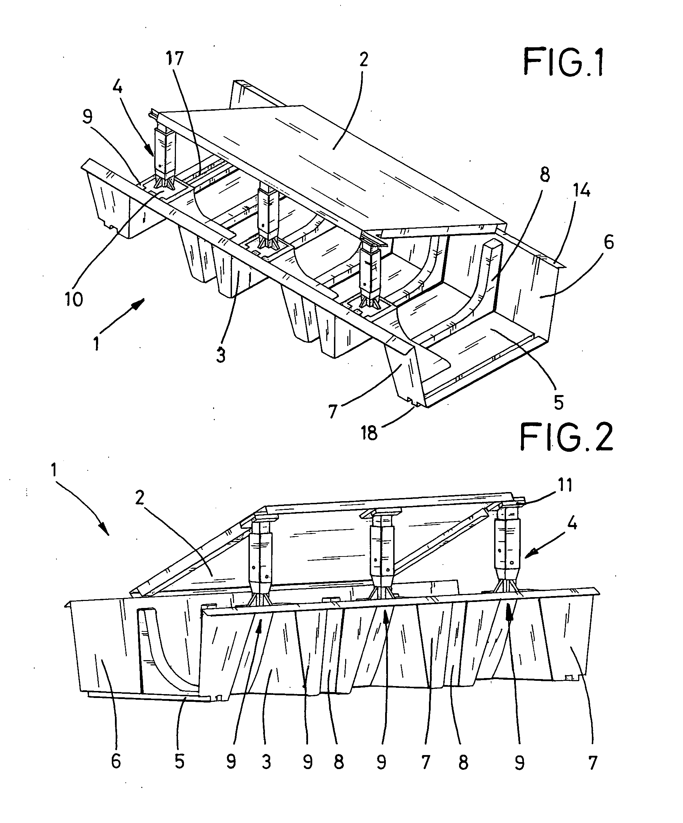

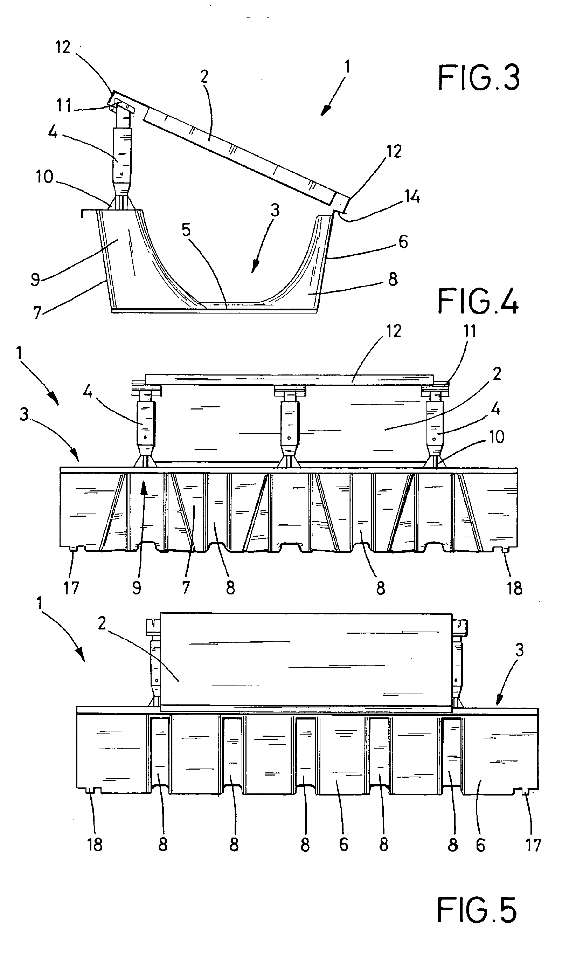

Das dargestellte Ausführungsbeispiel der Solarwanne 3 gemäß den Fig. 1 bis 5 ist als offene Rinne ausgestaltet, also ohne zwei Seitenwände, wie auch aus der Seitenansicht von Fig. 3 ersichtlich ist. Die Solarwanne weist also einen Boden 5 auf, eine Vorderwand 6 sowie eine Rückwand 7, die etwa gleich hoch ist wie die Vorderwand 6. Eine ausreichende Formstabilität wird der Solarwanne 3 durch Aussteifungsrippen 8 vermittelt, die in die Vorderwand 6 und den Boden 5 eingeformt sind sowie in die Rückwand 7 und den Boden 5 eingeformt sind.

Weiterhin sind in die Rückwand 7 mehrere Sockel 9 eingeformt, auf denen die Zwischenstücke 4 jeweils mit einer am Zwischenstück 4 vorgesehenen Basis 10 aufstehen. Im oberen Bereich bilden die Zwischenstücke 4 jeweils eine Halterung 11 aus, die, wie insbesondere Fig. 3 zeigt, zur schnappverschlussartigen, rastenden Festlegung des Solarmoduls 2 in dessen oberem Bereich dient. Bei dem dargestellten Ausführungsbeispiel ist hierzu ein umlaufender Rahmen 12 am Solarmodul 2 vorgesehen. Dieser Rahmen 12 wird durch ein Metallprofil gebildet, welches in eine Hinterschneidung der Halterung 11 eingreift.

Das untere, vordere Ende des Solarmoduls 2 ist dadurch an der Solarwanne 3 festgelegt, dass nahe der Vorderwand 6 die Solarwanne eine Befestigungsleiste 14 ausbildet, die bei dem dargestellten Ausführungsbeispiel als Abkantung von der Vorderwand 6 ausgeführt ist und eine Verschraubung mit dem Metallprofil des Rahmens 12 ermöglicht.

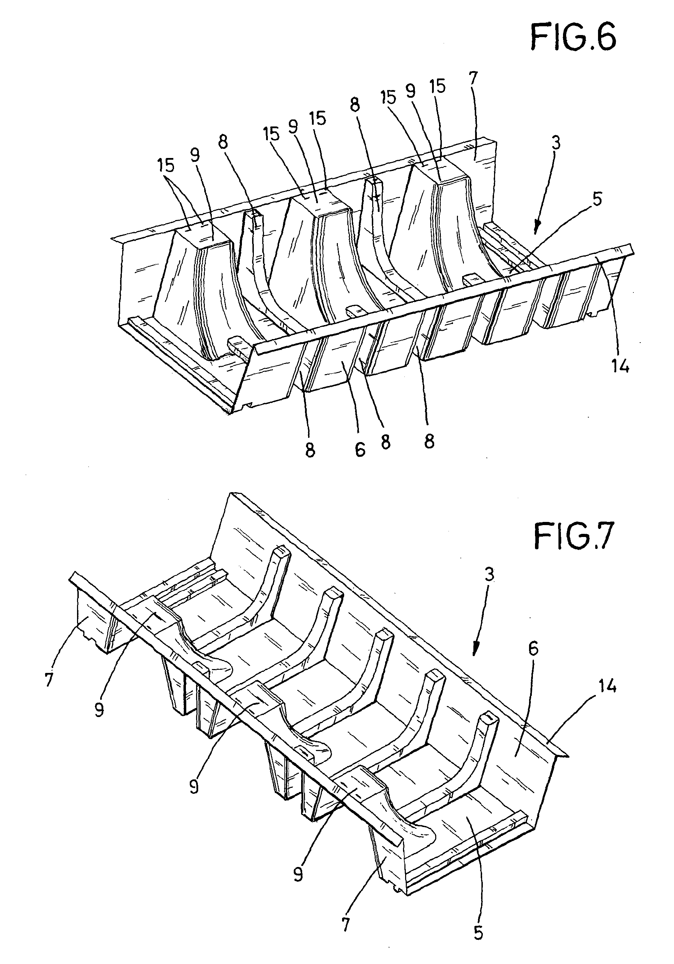

Fig. 6 zeigt, dass in der Rückwand 7 knapp oberhalb der Sockel 9 jeweils zwei Schlitze 15 vorgesehen sind, die zur Festlegung der Basis 10 dienen, wie später noch näher erläutert wird.

Die Fig. 1, 2, 4 und 5 lassen erkennen, dass die Solarwanne länger ist als das Solarmodul 2, so dass mehrere Solarmodule 2 nebeneinander, über die Verbindungsstelle zweier benachbarter Solarwannen 3 hinweg angeordnet werden können. Die Solarmodule liegen an ihren beiden äußeren Enden nur zur Hälfte auf der Halterung 11 eines Zwischenstückes 4 auf, so dass dieselbe Halterung auch noch ein benachbartes Solarmodul 2 aufnehmen kann. Ein sicherer formschlüssiger Verbund zweier benachbarter Solarwannen 3 des ersten Ausführungsbeispiels wird durch die komplementäre bzw. korrespondierende Ausgestaltung der beiden Enden der Solarwanne 3 bewirkt: Am einen Ende bildet der Boden 5 eine vergleichsweise breite Aufnahmenut 17 aus, in welche eine Anschlussrippe 18 der benachbarten Solarwanne 3 eintauchen kann. Der freie Innenquerschnitt der Solarwanne 3 im Bereich der Aufnahmenut 17 ist entsprechend angepasst daran, das stirnseitige Ende der benachbarten Solarwanne 3 mit der Anschlussrippe 18 aufnehmen zu können, so dass zwei benachbarte Solarwannen 3 einander überlappen bzw. ineinander gesteckt angeordnet werden können.

Auf diese Weise sind die Solarwannen 3 des ersten Ausführungsbeispiels in beliebiger Länge aneinander reihbar, so dass in besonders guter Ausnutzung einer vorgegebenen Grundfläche die Solarmodule möglichst dicht aneinander gereiht montiert werden können. Die beiden Enden einer entsprechend langen Rinne aus Solarwannen 3 können durch eigens vorgesehene Endstücke abgeschlossen werden, die entweder eine Solarwanne 3, wie in den Fig. 1 - 7 dargestellt, verschließen oder die als Solarwanne mit einer einzigen Seitenwand 16 ausgestaltet sind.

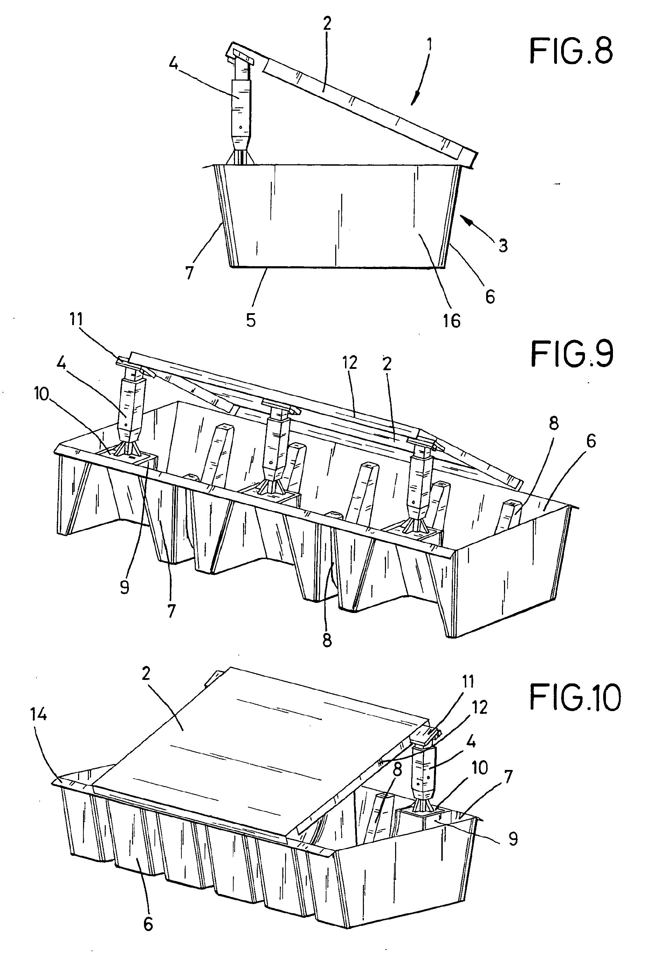

Die Fig. 8 - 10 zeigen ein zweites Ausführungsbeispiel einer Solareinrichtung 1. Bei diesem Ausführungsbeispiel ist die Solarwanne 3 als geschlossene Wanne mit zwei Seitenwänden 16 ausgestaltet. Während die zuerst beschriebene Solareinrichtung der Fig. 1 - 7 für eine Aneinanderreihung mehrerer Solarwannen und dementsprechend mehrerer Solarmodule 2 ausgestaltet und vorgesehen ist, kann dieses zweite Ausführungsbeispiel einer Solareinrichtung 1 als einzelne, separate Einrichtung aufgestellt werden. Bis auf die Ausgestaltung der Seitenwände 16 ist die Solarwanne 3 des zweiten Ausführungsbeispiels gemäß den Fig. 8 - 10 ansonsten im Wesentlichen baugleich mit der Solarwanne 3 des ersten Ausführungsbeispiels.

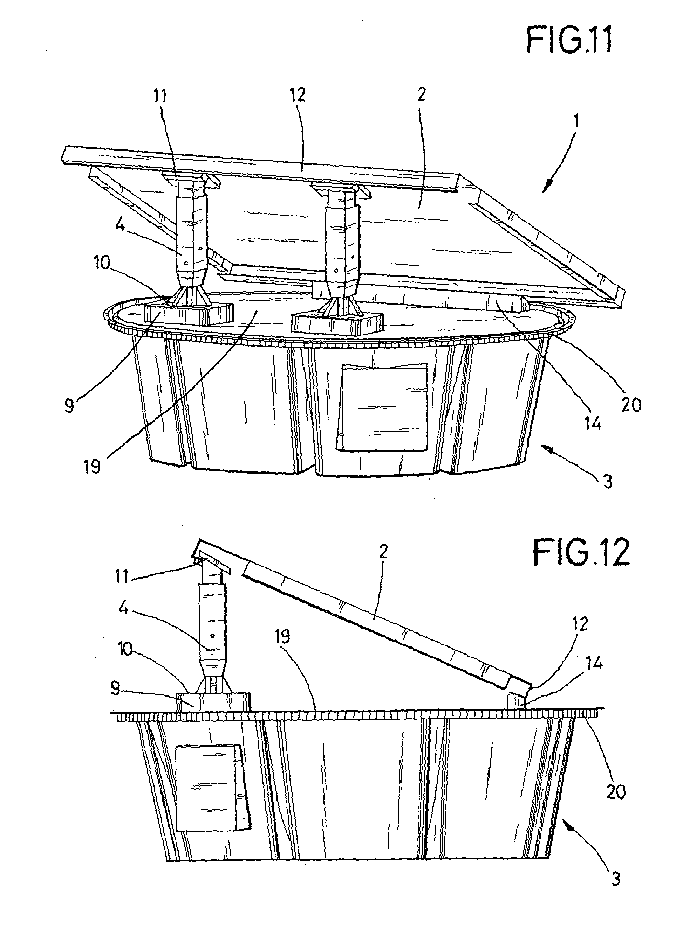

Die Fig. 11 - 17 zeigen ein drittes Ausführungsbeispiel, bei welchem die Solarwanne 3 als kreisrunder Topf ausgestaltet ist, so dass Vorder- und Rückwände kontinuierlich und gleichmäßig ineinander übergehen. Die Befestigungsleiste 14 zur Festlegung der unteren bzw. vorderen Kante des Solarmoduls 2 wird bei dieser Solareinrichtung 1 von einem Drehteller 19 gebildet, der gegenüber der Solarwanne 3 um eine aufrechte Achse drehbar ist. Dieser Drehteller 19 weist zudem eine außen umlaufende Verzahnung 20 auf. Dieser oder ein vergleichbarer Drehteller 19 könnte abweichend von dem dargestellten dritten Ausführungsbeispiel auch bei einer Solarwanne mit eckiger, beispielsweise rechteckiger oder mehreckiger Grundform Anwendung finden.

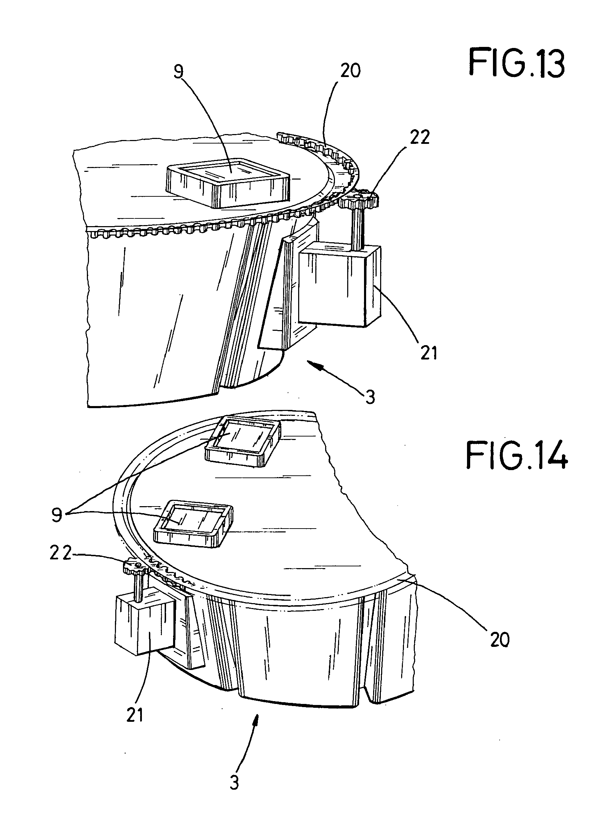

Wie Fig. 13 und 14 zeigt, ist an der Solarwanne 3 ein eigener Antriebsmotor innerhalb eines Gehäuses 21 vorgesehen, der über ein Antriebszahnrad 22 auf die Verzahnung 20 des Drehtellers 19 einwirkt, so dass das Solarmodul 2 bei diesem Ausführungsbeispiel innerhalb eines Tages dem unterschiedlichen Sonnenstand angepasst und nachgeführt werden kann.

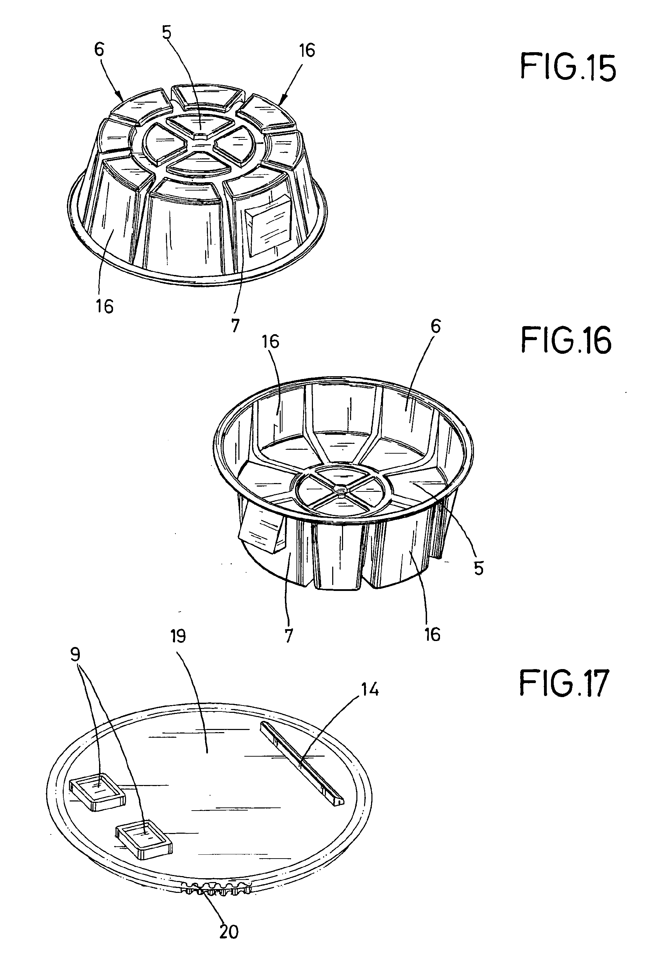

Die Fig. 15 und 16 zeigen den topfartigen Unterbau der Solarwanne 3 dieses dritten Ausführungsbeispiels, und Fig. 17 zeigt den Drehteller 19 mit der Befestigungsleiste 14, die ein Auflager für die Vorderkante des Solarmoduls 2 bildet, und mit den beiden Sockeln 9, welche die Auflager für Zwischenstücke 4 bilden, um das Solarmodul 2 an seiner rückwärtigen Kante abzustützen und zu halten. Rein beispielhaft sind Abschnitte der Solarwanne 3 als Vorderseiten und Rückwände bezeichnet, wobei diese aufgrund der Kreisform der Solarwanne 3 kontinuierlich ineinander übergehen bzw. miteinander verbunden sind.

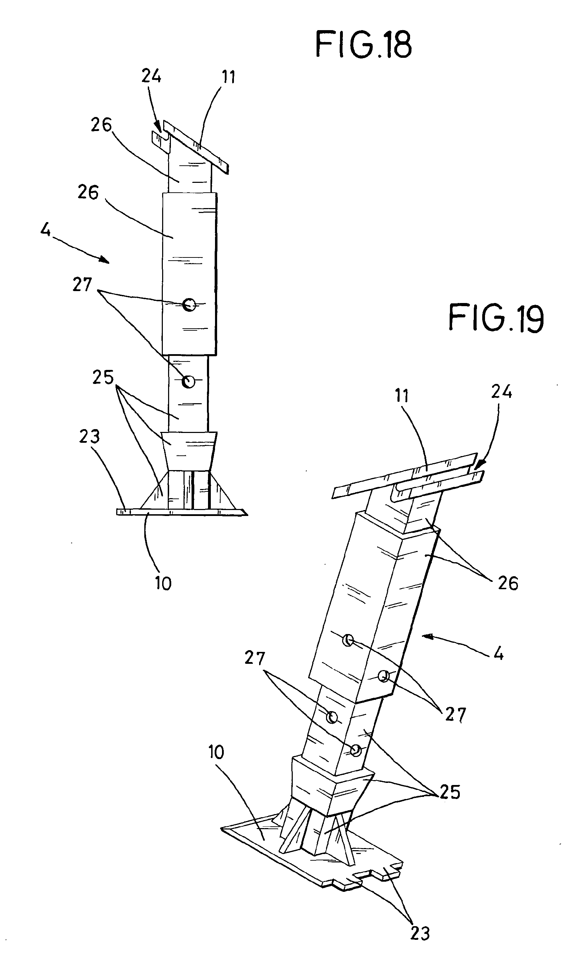

Die in den bisher beschriebenen Zeichnungen dargestellten Zwischenstücke 4 sind in den Fig. 18 und 19 detaillierter dargestellt:

Die Basis 10 weist zwei Fortsätze 23 auf, die in die Schlitze 15 der Solarwanne 3 eingreifen können. Am gegenüberliegenden Rand ist die Basis 10 angeschrägt, so dass sie gegebenenfalls mit einer Hinterschneidung, die an dem Sockel 9 vorgesehen sein kann, eine Rast- oder Schnappverbindung ausbilden kann, so dass eine schnelle, werkzeuglose Montage des Zwischenstücks möglich ist, wenn die Solareinrichtung installiert wird.

Am oberen Ende weisen die Zwischenstücke 4 im Bereich ihrer Halterung 11 eine Nut 24 auf, in die der Rahmen 12 des Solarmoduls 2 eingreifen kann.

Während die Basis 10 ein Abschnitt eines Unterteils 25 des Zwischenstückes 4 ist, ist die Halterung 11 Teil eines Oberteils 26 des Zwischenstückes 4, wobei das Oberteil 26 das Unterteil 25 übergreift und die beiden Ober- und Unterteile 26 und 25 somit höhenbeweglich teleskopierbar sind. Querbohrungen 27 ermöglichen es, nicht dargestellte Sicherungsstifte einzusetzen, welche das Oberteil 26 und das Unterlagen 25 als Querbolzen durchsetzen. Dabei sind mehrere Querbohrungen 27 vorgesehen, so dass die Zwischenstücke 4 unterschiedlich hoch ausgestaltet werden können. Bei einer Höhenverstellung des Zwischenstückes 4 kann ein Solarmodul 2 insbesondere bei den ersten Ausführungsbeispielen der Fig. 1 bis 10 sowohl an den Halterungen 11 der Zwischenstücke 4 befestigt bleiben als auch an der vorderen Befestigungsleiste 14 verschraubt bleiben, denn die Flexibilität des Materials der Solarwanne 3 ermöglicht eine Verformung im Bereich der Befestigungsleiste 14, so dass eine Neigungsänderung des Solarmoduls 2, die durch eine Höhenverstellung der Zwischenstücke 4 bewirkt wird, durch eine entsprechende Verformung der Solarwanne 3 kompensiert wird, ohne das Solarmodul 2 durch unzuträglich hohe Spannungsbelastungen zu gefährden.

Abweichend von den dargestellten Ausführungsbeispielen kann vorgesehen sein, den Boden 5 der Solarwanne 3 mit Durchbrechungen zu versehen, welche den Abtransport von Flüssigkeit ermöglicht, die in die Solarwanne 3 gelangt ist. Die Durchbrechungen können so groß sein, dass sie mehr als 50% der Bodenfläche ausmachen, der Boden 5 also skelettiert oder gitterartig ausgestaltet ist. Die zulässige Größe der Durchbrechungen kann insbesondere dadurch begrenzt sein, dass der vorgesehene Ballast mit seiner Gewichtskraft auf die Solarwanne einwirken soll, so dass die Durchbrechungen vorteilhaft kleiner bemessen sein können als die durchschnittlichen Querschnittsabmessungen der vorgesehenen Ballastkörper. Beispielsweise können Schutt, Felsgestein oder Betonplatten als Ballastkörper mit großen Querschnittsabmessungen verwendet werden. Der Boden 5 kann auf seiner Unterseite reibmindernd ausgestaltet sein, um die Standsicherheit der Solareinrichtung 1 auch bei Windeinwirkung zu verbessern.

## Patentansprüche

1. Die Einstrahlung von Sonnenlicht nutzende Solareinrichtung, mit einem Solarmodul, welches als Photovoltaik-Modul zur Erzeugung elektrischer Energie oder als Solarkollektor zur Erwärmung eines durch den Kollektor geleiteten Wärmeträgerfluids ausgestaltet ist,
und mit einer Stütze, welche das Solarmodul gegenüber einem Untergrund abstützt, und welche eine so genannte Solarwanne umfasst, die einen Boden, eine Rückwand und eine Vorderwand ausbildet,
wobei nahe der Vorderwand der Solarwanne eine vordere Kante des Solarmoduls festgelegt ist,
**dadurch gekennzeichnet,**
**dass** höhenverstellbare Zwischenstücke (4) vorgesehen sind, die
■ jeweils eine Basis (10) aufweisen, mit welcher sie sich nahe der Rückwand (7) auf der Solarwanne (3) abstützen,
■ sich von der Basis (10) aufwärts erstrecken,
■ und die eine Halterung (11) oberhalb der Basis (10) aufweisen, an welcher Halterung (11) das Solarmodul (2) im Abstand von seiner vorderen Kante festgelegt ist.

2. Solareinrichtung nach Anspruch 1,
**dadurch gekennzeichnet,**
**dass** die Solarwanne (3) an ihrer Vorderwand (6) Befestigungsstellen aufweist, an denen das Solarmodul (2) mit der Solarwanne (3) fest verbunden ist,
und **dass** die Zwischenstücke (4) Rasten ausbilden, an denen das Solarmodul (2) an der Halterung (11) in Art einer Schnappverbindung gehalten ist.

3. Solareinrichtung nach Anspruch 2,
**dadurch gekennzeichnet,**
**dass** das Solarmodul (2) mit der Solarwanne (3) verschraubt ist.

4. Solareinrichtung nach einem der vorhergehenden Ansprüche,
**dadurch gekennzeichnet,**
**dass** die Solarwanne (3) in dem Bereich, wo die vordere Kante des Solarmoduls (2) festgelegt ist, flexibel ist, derart, dass sich die Solarwanne (3) durch Verformung an unterschiedliche Neigungen des Solarmoduls (2) anpasst.

5. Solareinrichtung nach einem der vorhergehenden Ansprüche,
**dadurch gekennzeichnet,**
**dass** das Solarmodul (2) einen umlaufenden Rahmen (12) aufweist, der an den Zwischenstücken (4) und / oder an der Solarwanne (3) festgelegt ist.

6. Solareinrichtung nach einem der vorhergehenden Ansprüche,
**dadurch gekennzeichnet,**
**dass** die Solarwanne (3) wenigstens einen Sockel (9) aufweist, an dem die Basis (10) eines Zwischenstücks (4) an der Solarwanne (3) befestigbar ist.

7. Solareinrichtung nach Anspruch 6,
**dadurch gekennzeichnet,**
**dass** die Solarwanne (3) eine Mehrzahl von Sockeln (9) aufweist, derart, dass der Abstand und / oder die Anzahl der Zwischenstücke (4) wählbar ist.

8. Solareinrichtung nach einem der vorhergehenden Ansprüche,
**dadurch gekennzeichnet,**
**dass** die Solarwanne (3) aus Kunststoff besteht.

9. Solareinrichtung nach einem der vorhergehenden Ansprüche,
**dadurch gekennzeichnet,**
**dass** der Boden (5) der Solarwanne (3) an seiner Unterseite gleitmindernd ausgestaltet ist.

10. Solareinrichtung nach Anspruch 9,
**dadurch gekennzeichnet,**
**dass** die Unterseite des Bodens (5) mit einer gummiartigen, reibfreudigen Beschichtung versehen ist.

11. Solareinrichtung nach Anspruch 9,
**dadurch gekennzeichnet,**
**dass** die Unterseite des Bodens (5) mit einer Beschichtung versehen ist, welche im Vergleich zum übrigen Werkstoff der Solarwanne (3) die Verklebbarkeit der Solarwanne (3) verbessert.

12. Solareinrichtung nach Anspruch 9,
**dadurch gekennzeichnet,**
**dass** die Unterseite des Bodens (5) mit einem oberflächenrauen Material versehen ist, welches eine mechanische Verzahnung mit einem korrespondierenden Untergrund ermöglicht.

13. Solareinrichtung nach Anspruch 12,
**dadurch gekennzeichnet,**
**dass** die Unterseite des Bodens (5) mit einem Material versehen ist, welches einen Teil eines Häkchenverschlusses bildet, wobei der korrespondierende andere Teil des eines Häkchenverschlusses an einer Bodenmatte vorgesehen ist.

14. Solareinrichtung nach einem der vorhergehenden Ansprüche,
**dadurch gekennzeichnet,**
**dass** die Zwischenstücke (4) derart drehfrei ausgestaltet sind, dass während der Höhenverstellung die solarwannenseitige Basis (10) an der Solarwanne (3) und die solarmodulseitige Halterung (11) an dem Solarmodul (2) verbleiben kann.

15. Solareinrichtung nach einem der vorhergehenden Ansprüche,
**dadurch gekennzeichnet,**
**dass** die Zwischenstücke (4) teleskopierbar sind.

16. Solareinrichtung nach einem der vorhergehenden Ansprüche,
**dadurch gekennzeichnet,**
**dass** die Solarwanne (3) wenigstens eine Seitenwand (16) aufweist.

17. Solareinrichtung nach einem der Ansprüche 1 bis 15,
**dadurch gekennzeichnet,**
**dass** die Solarwanne (3) unter Verzicht auf seitliche Wände als längliche Rinne ausgestaltet ist.

18. Solareinrichtung nach Anspruch 16 oder 17,
**dadurch gekennzeichnet,**
**dass** die Solarwanne (3) an ihrem einen offenen Ende oder an ihren beiden offenen Enden aneinanderreihbar ausgestaltet ist, derart, dass das eine offene Ende der Solarwanne (3) mit einem anderen offenen Ende einer benachbarten zweiten Solarwanne (3) formschlüssig verbindbar ist.

19. Solareinrichtung nach einem der Ansprüche 1 bis 18,
**dadurch gekennzeichnet,**
**dass** die Wände (6, 7, 16) der Solarwanne (3) kontinuierlich ineinander übergehen und die Solarwanne (3) einen runden Querschnitt aufweist.

20. Solareinrichtung nach einem der vorhergehenden Ansprüche,
**dadurch gekennzeichnet,**
**dass** die Solarwanne (3) einen Drehteller (19) aufweist, der einerseits ein Auflager aufweist, an welchem die vordere Kante des Solarmoduls (2) festgelegt ist,
und der andererseits wenigstens ein Auflager für eine Basis (10) eines Zwischenstücks (4) aufweist,
und wobei der Drehteller (19) um eine aufrechte Achse schwenkbar gelagert ist.

21. Solareinrichtung nach Anspruch 20,
**dadurch gekennzeichnet,**
**dass** die Solarwanne (3) Antriebsmittel für eine motorische Verstellung des Drehtellers (19) aufweist.

22. Solareinrichtung nach einem der vorhergehenden Ansprüche,
**dadurch gekennzeichnet,**
**dass** der Boden (5) der Solarwanne (3) Durchbrechungen aufweist, welche die Bildung von Staunässe verhindernd das Ablaufen von Flüssigkeit ermöglichen.

23. Solarwanne (3), die nach einem der vorhergehenden Ansprüche ausgestaltet ist und in dem Bereich, wo die vordere Kante des Solarmoduls (2) festgelegt ist, flexibel ist, derart, dass sich die Solarwanne (3) durch Verformung an unterschiedliche Neigungen des Solarmoduls (2) anpasst.
